(19) Europäisches Patentamt
European Patent Office
Office européen des brevets

(11) Publication number: **0 370 509 A2**

(12) **EUROPEAN PATENT APPLICATION**

(21) Application number: 89121675.6

(22) Date of filing: 23.11.89

(51) Int. Cl.[5]: **B01D 69/12, B01D 71/64, B01D 71/40, B01D 53/22**

(30) Priority: 22.11.88 SU 4638856
30.08.89 CS 5047/89

(43) Date of publication of application:
30.05.90 Bulletin 90/22

(84) Designated Contracting States:
BE CH DE FR GB LI SE

(71) Applicant: CESKOSLOVENSKA AKADEMIE VED
Narodni 3
Praha 1(CS)

Applicant: AKADEMIA NAUK SSSR
Leninskij Prospekt 14
117 901 Moskau V-71(SU)

(72) Inventor: Bleha, Miroslav, Dipl.-Ing. CSc
Lublanská 46
Praha 2(CS)
Inventor: Schauer, Jan, Dipl.-Ing. CSc
Pod kastany 8/246
Praha 6(CS)
Inventor: Lokaj, Jan, Dipl.-Ing. Csc
Národni Obrany 7
Praha 6(CS)
Inventor: Polockaja, Galina Andrejevna CSc
Leningradskoje sosse 13/I
Leningrad-Puskin(SU)
Inventor: Kuznécov, Jurij Petrovic CSc
Nalicnaja 36
Leningrad(SU)
Inventor: Romaskova, Kira Alexandrovna
Kosygina 23
Leningrad(SU)

(74) Representative: Patentanwälte Beetz sen. - Beetz jun. Timpe - Siegfried - Schmitt-Fumian- Mayr
Steinsdorfstrasse 10
D-8000 München 22(DE)

(54) **Composite polymeric membranes for the separation of gas mixtures and their preparation.**

(57) The invention pertains to composite polymeric membranes for the separation of gas mixtures and a method for their preparation. The membranes have higher selectivity in the separation of mixtures $He/N_2$ and $O_2/N_2$, suitable mechanical properties and a high permeability. They consist of a polymeric porous base made from poly(2,6-dimethyl-1,4-phenyleneoxide) and a polymeric selective separation layer formed from a polyamidoimide of the general formula I,

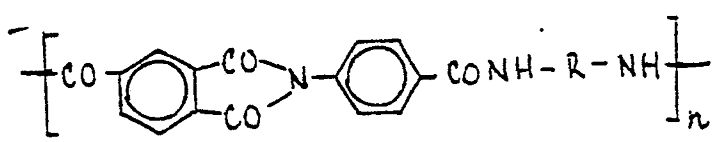

(I)

where R = 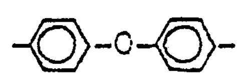 (PAI-1), 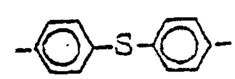 (PAI-2) or

70% 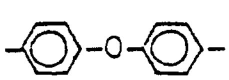 and 30% 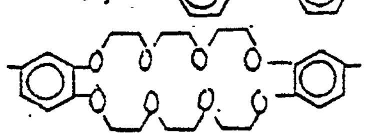 (PAI-3)

and

EP 0 370 509 A2

n = 140- 220,
or from an interpolymeric equimolar complex of PAI-1 with polyvinylpyrrolidone, or from an aromatic polyimide of the general formula II,

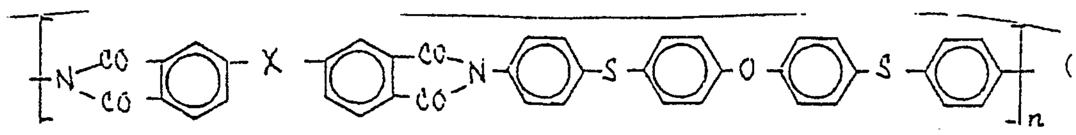 (II)

where X is -O- or 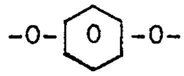

and n = 150-230,
or of the general formula III,

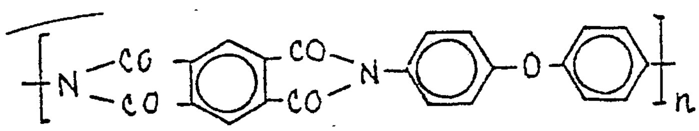 (III)

where n = 150-240,
or from polymeric imides of the general formula IV,

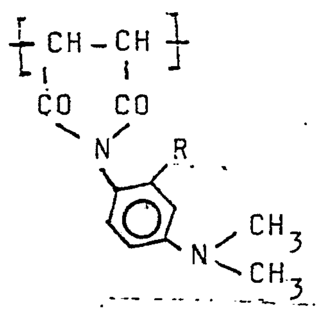 (IV)

or also from their copolymers with styrene, methyl methacrylate, methyl acrylate, and dimethylaminoethyl methacrylate.

The method for the preparation of these composite polymeric membranes consists in saturation of a porous base of poly(2,6-dimethyl-1,4-phenyleneoxide) with an inert organic solvent, e.g. aliphatic $C_7H_{16}$ to $C_{10}H_{22}$ aliphatic hydrocarbons or their mixtures, drying, and coating with a 1 to 25 mass-% solution of the selective separation polymer in an organic solvent incompatible with the organic liquid, e.g. N-methylpyrrolidone, N,N-dimethylformamide, and/or N,N-dimethylacetamide.

## Composite polymeric membranes for the separation of gas mixtures and their preparation

The invention pertains to composite polymeric membranes, to a method of their preparation, and their use for the separation of mixtures of gases.

The basic requirements on membranes used in the membrane separation of gases are a high permeability and a high selectivity of separation (Kesting, R.B., "Synthetic Polymer Membranes", New York, Wiley-Interscience Publication, 1985, p. 22). Specific membranes are required for the separation of various vapours and gases. In order to attain a high gas permeability with high selectivity, the thickness of membranes has to be at least 2 µm, however, the physico-technical parameters become unsatisfactory, microcracks and pores occur, and the membranes do not resist the load.

These shortcomings are overcome by composite membranes, which are formed from a thin non-porous layer for gas sepa ration provided on a microporous pol y mer base. The base provides the required mechanical and application properties, and, at the same time, practically does not affect the permeability and selectivity. On the contrary, the selective separation layer may be very thin, until a molecular coating layer.

There exist various methods for the preparation of composite membranes for gas separation; in particular, there is known a method for the preparation of selectively permeable membranes (JP-A-58-180,206) consisting in dipping a porous polymeric base with a pore diameter of 0.001 to 5 µm into a bath with a precipitant which reduces the pore width of the base and produces a thin layer on the surface thereof. A thin film is produced on the base obtained in this way by applying a solution of a polymer in an organic solvent, and the resulting product is then dried. Polysiloxanes, vinyl polymers and copolymers, polycarbonates, polyesters, and cellulose derivatives are used as polymers dissolved in organic solvents (halogenated hydrocarbons, aliphatic and cyclic hydrocarbons, ethers, ketones, aldehydes, and/or amines). As the porous base, molded films based on polypropylene, polysulfone, poly(vinyl chloride), polytetrafluoroethylene, and/or cellulose acetate can be used. Water, alcohols, ethers, of their mixtures are used as the precipitant for filling the pores. Membranes prepared in this way have a permeability for oxygen/nitrogen mixtures and have a selectivity coefficient $\alpha_{O_2}/N_2$ of 1.7 to 2.3.

The main disadvantage of this prior art is the low selecti vity of the prepared membranes, which are suited only for the separation of the oxygen/nitrogen gas mixtures.

It is the object of the present invention to provide composite polymeric membranes for gas separation which have high selectivity, particularly in the separation of $He/N_2$ and $O_2/N_2$, good mechanical properties and a high permeability.

The above object is achieved according to the claims, the dependent claims relating to the preferred embodiments.

The composite polymeric membranes according to the present invention have high separation selectivity, convenient mechanical properties and high gas permeability. They comprise a polymeric porous base on the basis of poly(2,6-dimethyl-1,4-phenyleneoxide) (PFO) and a polymeric selective separation layer provided thereon.

The polymeric selective separation layer is preferably made of a polyamidoimide, an aromatic polyimide and/or a polymeric imide.

According to a preferred embodiment, the polymeric selective separation layer is made of at least one compound selected from

(A) polyamidoimides (PAI) consisting of monomer units of the general formula I

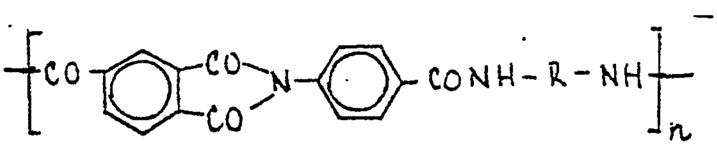 (I)

wherein

R is 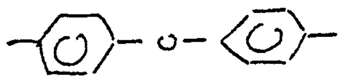 (PAI-1)

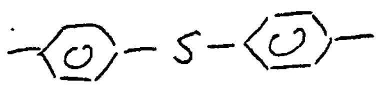 (PAI-2)

or

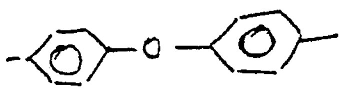 (70 %) and

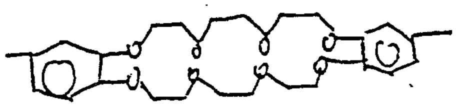 (30 %) (PAI-3)

and

n is 140 to 220,

(B) interpolymeric equimolar complexes of a polyamidoimide (PAI-1) of formula I as defined under above A with polyvinylpyrrolidone,

(C) aromatic polyimides consisting of monomer units of the general formula II

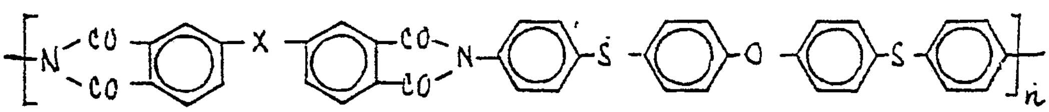 (II)

wherein

X is -0- or -0-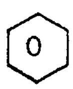-0,

and

n is 150 to 230,

(D) aromatic polyimides consisting of monomer units of the general formula IIIa and/or IIIb

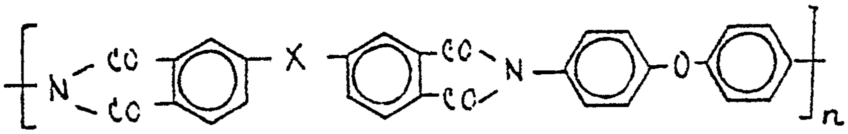

(IIIa)

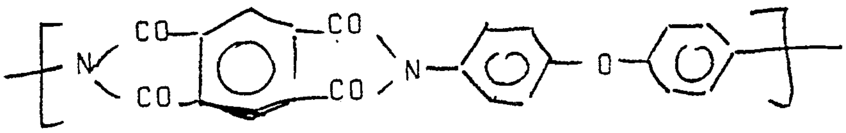

(IIIb)

wherein

X is -O- or 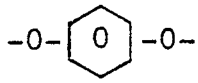

and

n is 150 to 240,

(E) polymeric imides consisting of monomer units of the general formula IV

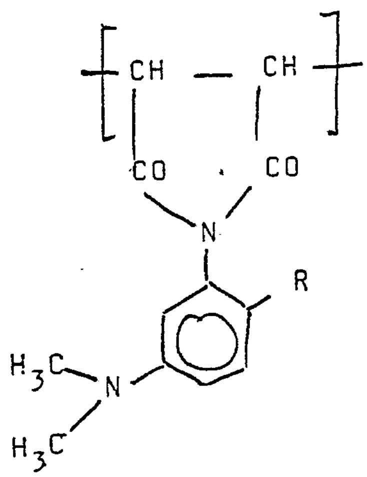

(IV)

wherein R is H or $CH_3$,

and

(F) copolymers comprising monomer units of formula IV as defined under above E, and comonomer units of styrene, methyl methacrylate, methyl acrylate and/or dimethylaminoethyl methacrylate.

The interpolymeric complexes of polyamidoimides PAI-1 with polyvinylpyrrolidone (PVP) according to above feature B lead to membranes having further improved selectivity.

The method of the present invention for preparing these composite polymeric membranes is characterized by the following steps:

(1) saturating a polymeric porous base of poly(2,6-dimethyl-1,4-phenyleneoxide) with an organic liquid which is inert towards the polymeric base,

(2) drying the polymeric base,

and

(3) applying a solution of a polyamidoimide, an aromatic polyimide and/or a polymeric imide in a solvent which is incompatible with the organic liquid used in step 1 on the surface of the polymeric porous base.

In accordance with a preferred embodiment, polymers are used in step 3 which are selected from the polymers defined above under A to F.

The concentration of the polymer solution used in step 3 is preferably 1 to 25 mass-%.

The principle of the method of the present invention consists in the saturation of the polymeric porous base based on poly-2,6-dimethyl-1,4-phenyleneoxide with the organic liquid filling the pores of the base.

N-methylpyrrolidone, N,N-dimethylacetamide, N,N-dimethylformamide or their mixtures are preferably used as solvents for polymer.

As the organic liquid incompatible with the solvent, they are preferably used compounds chosen from the homologous series comprising liquid aliphatic hydrocarbons $C_7H_{10}$ to $C_{10}H_{22}$ or their mixtures.

An analysis of the state of the art revealed that no information existed about forming polyamidoimide, polyimide, or imide membranes from a solvent on a base with pores saturated with an organic liquid inert towards the polymeric substance of the base and incompatible with the solvent for polymer.

The selectivity of the membrane systems formed in this way is high, in particular for the separation of mixtures $He/N_2$, $O_2/N_2$, and similar mixtures. The preparation of these membrane systems is simpler than for prior art polymer systems described in the literature. The polymers used are highly resistant both chemically and thermally; thus the membranes can be used in applications with high technological demands.

The found coefficients of selectivity are in many examples higher than for known systems; accordingly, separation processes can be carried out with these membranes with high efficiency.

The invention is further illustrated by way of examples. The permeability is designated with P, the selectivity is designated by $\alpha$.

## Example 1

A layer of 350 µm in thickness was cast on a glass plate of 10 cm x 10 cm from a 10 mass-% a solution of PAI-1 in N-methylpyrrolidone and dried in air at 60 °C, and then at 40 °C in vacuo for several days. The prepared membrane was homogeneous and suitable for gas separation. The film thickness was 20 µm.

$P_{He} = 2.56 \cdot 10^{-7}$ cm³/cm²•s•cmHg;

$P_{N2} = 0.145 \cdot 10^{-7}$ cm³/cm²•s•cmHg;

$\alpha_{He/N2} = 18.3$.

## Example 2

A layer of 350 µm in thickness was cast from a 8 mass-% solution of poly(2,6-dimethyl-1,4-phenyleneoxide) in a mixture of chloroform and butanol (85:15 w/w) on a glass plate of 20 cm x 20 cm. The plate was dipped, after 20 s, into a coagulation bath with ethanol for 30 to 40 min. The drying was carried out in air. The membrane prepared in this way was microporous and not suitable for separation:

$P_{He} = 2350 \cdot 10^{-7}$ cm³/cm²•s•cmHg;

$P_{N2} = 2310 \cdot 10^{-7}$ cm²/cm³•s•cmHg;

$\alpha_{He/N2} = 1$.

This product represents the material applicable as the base.

## Example 3

A layer of 350 µm in thickness was cast from a 8 mass-% solution of poly(2,6-dimethyl-1,4-phenyleneoxide) in a mixture of chloroform and butanol (85:15 w/w) on a glass plate of 20 cm x 20 cm. After 20 s, the plate was immersed into a coagulation bath with ethanol for 30 to 40 min and then into a bath with a heptane/decane mixture (80:20 v/v), kept therein for 2 h and then dried in air. A 3 mass-% solution of PAI-1 in N-methylpyrrolidone was cast on the microporous base prepared in this way. The membrane was placed vertically to enable the excess solution to flow off. The membrane was then dried at 40 °C in vacuo. The yellow layer of PAI-1 was visually homogeneous and exhibited the same separation selectivity as the homogeneous membrane made from PAI-1 (see example 1), but had a better permeability:

$P_{He} = 10.3 \cdot 10^{-7}$ cm³/cm²•s•cmHg;

$P_{N2} = 0.57 \cdot 10^{-7}$ cm³/cm²•s• cmHg;

$\alpha_{He/N2} = 18$.

Examples 4, 5, and 7 to 11

Composite polymeric membranes were prepared according to the procedure described in example 3.

Example 6

A microporous base was prepared according to the method described in example 3.

A 3 mass-% solution of an interpolymeric complex PAI-1 - PVP (1:1 mol/mol) was prepared by mixing 1.2 g of PAI-1 and 0.28 g of PVP in 50 ml of a N-methylpyrrolidone - N,N-diethylformamide mixture (50:50 w/w) and cast on the base. The membrane obtained was placed vertically to enable the excess solution to flow off. The membrane was dried at 40 °C in vacuo.

The experimental conditions and results of examples 1 to 11 are summarized in Table 1 where the following abbreviations are used:

PFO = poly(2,6-dimethyl-1,4-phenyleneoxide)
MP = N-methylpyrrolidone
DMA = N,N-dimethylacetamide
DMF = N,N-dimethylformamide.

Table 1.

| Experimental results | | | | | | | | |
|---|---|---|---|---|---|---|---|---|
| Example No. | Base | Organic liquid | Polymer concn. (mass-%) | Solvents | Membranes characteristics | | | |
| | | | | | Thickness (µm) | Permeab. coeff. ($cm^3/cm^2 \cdot s \cdot cmHg$) | | selectivity $He/N_2$ |
| | | | | | | $P_{He} \cdot 10^7$ | $P_{N2} \cdot 10^7$ | |
| 1 | - | - | 8% PAI-1 | MP | 20 | 2.56 | 0.145 | 17.6 |
| 2 | PFO | - | - | - | 20 | 2350 | 2310 | 1 |
| 3 | PFO | $C_7 + C_{10}$ | 3% PAI-1 | MP | 2.0 | 10.3 | 0.57 | 18.1 |
| 4 | PFO | $C_9$ | 3% PAI-2 | DMA. | 2.0 | 10.0 | 0.55 | 18.2 |
| 5 | PFO | $C_{10}$ | 1% PAI-3 | MP | 0.7 | 34.0 | 1.40 | 24.2 |
| 6 | PFO | $C_8 + C_{10}$ | 3% PAI-1:PVP | MP + DMF | 1.5 | 29.3 | 0.63 | 46.2 |
| 7 | PFO | $C_{10}$ | 2% PAI-1:PVP | MP + DMF | 1.0 | 32.0 | 0.56 | 57.1 |
| 8 | PFO | $C_{10}$ | 4%PAI-1 | MP | 4.0 | 5.4 | 0.32 | 17 |
| 9 | PFO | $C_8$ | 0,5% PAI-1 | MP | 0.3 | The defective layer | | |
| 10 | PFO | $C_{12}$ | 3% PAI-1 | MP | | back off adhesive | | |
| 11 | PFO | - | 1% PAI-1 | MP | | deformed base | | |

For the sake of comparison values of transport properties for membranes from other materials are given in Table 2.

Table 2.

| Literature data* | | | | |
|---|---|---|---|---|
| No. | Polymer | Permeability coefficient ($cm^3/cm^2 \cdot s \cdot cmHg$) | | Selectivity He/$N_2$ |
| | | $P_{He}x10^8$ | $P_{N2}x10^8$ | |
| 1 | Polyisoprene | 0.35 | 0.10 | 3.5 |
| 2 | Polyethylene | 0.05 | 0.01 | 5.0 |
| 3 | Polyvinyltrimethylsilane | 1.8 | 0.11 | 16.4 |
| 4 | Polyamide-II | 0.016 | 0.0002 | 80.0 |

* Tepljakov V.V., Durgarjan S.G., "Korelacionnyj analiz parametrov gazopronicaismoti polymerov" - Vyskomol soed. A., 26 (1984) 1498.

Example 12

A microporous membrane was prepared by casting a 10 mass-% solution of poly(2,6-dimethyl-1,4-phenyleneoxide) in a chloroform - butanol mixture (85:15 w/w) in a 350 µm thick layer on a glass plate and coagulation in the bath with ethanol. It was modified for the application of a selective separation layer by subsequent exposure in a decane bath for 2 hours and then drying at laboratory temperature for 5 hours. A 3 mass-% solution of a polyimide (formula II, X = -O-) in N-methylpyrrolidone was cast on the base. An excess of the solution was removed by placing the membrane in a vertical position. The membrane was ready for use after drying at 40 °C in vacuo. Measurements of the membrane permeability for gases and their mixtures gave selectivity coefficients $\alpha_{He/N2}$ = 36.5 and $\alpha_{O2}/N_2$ = 4.06.

Example 13

A microporous membrane was prepared from a 8 mass-% solution of poly(2,6-dimethyl-1,4-phenyleneoxide) in a chloroform -butanol mixture (85:15 w/w) according to the procedure of example 12. After exposure in a heptane - decane mixture for 3 hours and drying at laboratory temperature for 4 hours, a selective separation layer with a thickness of approx. 15 µm was formed on this base from a 3 mass-% solution of a polyimide

(formula II, X = 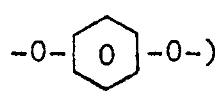 )

in N-methylpyrrolidone. The selectivity coefficients determined for this membrane and mixtures He/$N_2$ and $O_2/N_2$ were $\alpha_{He/N2}$ = 65 and $\alpha_{O2}/N_2$ = 4.3.

Example 14

A microporous membrane was prepared from poly(2,6-dimethyl-1,4-phenyleneoxide) and modified as a base as in example 12. A layer was first formed on this base by casting a polymer solution base on a compound with units of formula V

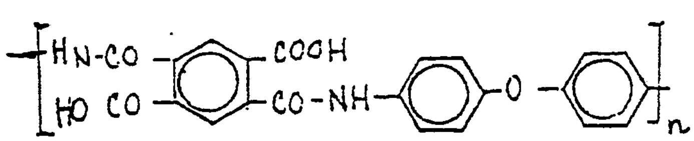

(V)

from a 5 mass-% solution in N,N-dimethylformamide. A membrane layer of the type given by formula IIIb resulted from a condensation reaction after about 10 min by treatment with a pyridine - acetic anhydride mixture (1:1 w/w). The resulting membrane was dried in vacuo at 40 °C. The following selectivity coefficients were determined by measuring the permeability for gases and their mixtures: $\alpha_{He/N_2}$ = 110.8, and $\alpha_{O_2}/N_2$ = 3.9.

Example 15

A microporous membrane was prepared as a base similarly as in example 13 and modified by application of a selective separation layer by the method according to example 12. A 3 mass-% solution of polymer (IIIb), the same as in example 14, in dimethylformamide was cast on the modified base. An excess of the so luti on was removed by placing the membrane into a vertical position. The membrane was dried and then poured with a pyridine - acetic anhydride mixture (1:1 w/w). After completion of the condensation reaction, the membrane was dried in vacuo at 40 °C. The following selectivity coefficients were determined for the membrane: $\alpha_{He/N_2}$ = 71, and $\alpha_{O_2}/N_2$ = 4.1.

Example 16

A membrane prepared from poly(2,6-dimethyl-1,4-phenyleneoxide) according to example 12 was used as a base for the preparation of a composite membrane from a copolymer comprising units of formula IV, where R = $CH_3$, and of styrene (molar ratio 1:2). A 15 mass-% solution of this copolymer in dimethylformamide was poured on the base, excess solution was removed, and the membrane was dried in vacuo at 40 °C. The following selectivities were determined for this membrane: $\alpha_{He/N_2}$ = 14.5, and $\alpha_{O_2}/N_2$ = 2.8.

Table 3 shows the transport properties of further membranes prepared according to examples 12 to 15.

Table 3

| Sample No. | Polyimide* | Permeability of membrane $\cdot 10^6 (cm^3/cm^2 \cdot s \cdot cmHg)$ | | | | Selectivity | |
|---|---|---|---|---|---|---|---|
| | | He | $N_2$ | $O_2/N_2$ | $CO_2$ | $He/N_2$ | $O_2/N_2$ |
| 1 | PI-11 | 1.8 | 0.033 | 0.11/0.03 | 0.74 | 55 | 3.2 |
| 2 | PI-12 | 1.8 | 0.029 | | | 63 | |
| 3 | PI-12 | 1.46 | 0.029 | | | 50 | |
| 4 | PI-11 | 1.78 | 0.045 | | | 40 | |
| 5 | PI-11 | 3.4 | 0.093 | 0.47/0.11 | | 36.5 | 4.05 |
| 6 | PI-12 | 1.3 | 0.02 | 0.099/0.023 | | 65 | 4.3 |
| 7 | PI-12 | 5.3 | 0.185 | 0.637/0.155 | | 29 | 4.1 |
| 8 | PI-2 | 10.7 | | 0.895/0.245 | 3.93 | 44 | 3.7 |
| 9 | PI-2 | 8.53 | | 1.4/0.41 | | 21 | 3.4 |

* PI-11 = polyimide of formula II, where X = -O-

PI-12 = polyimide of formula II, where X = -O- 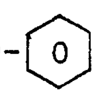 -O-

PI-2 = polyimide of formula IIIb

Claims

1. Composite polymeric membranes for the separation of gas mixtures comprising a polymer ic porous base and a poly meric selective separation layer provided on the polymeric porous base, characterized in that the polymeric porous base is a poly(2,6-dimethyl-1,4-phenyleneoxide).

2. The composite polymeric membranes according to claim 1, characterized in that the polymeric selective separation layer is a polyamidoimide, an aromatic polyimide and/or a polymeric imide.

3. The composite polymeric membranes according to claims 1 and 2, characterized in that the polymeric selective separation layer is formed from at least one compound selected from

(A) polyamidoimides (PAI) consisting of monomer units of the general formula I

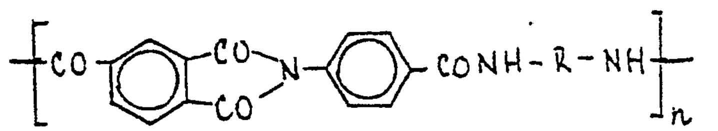 (I)

wherein

R is 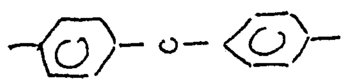 (PAI-1)

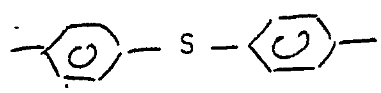 (PAI-2)

or

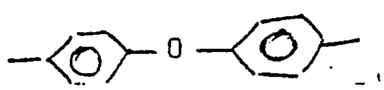 (70 %) and

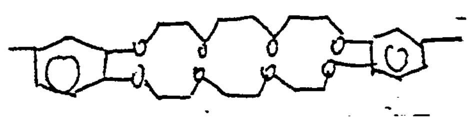 (30 %) (PAI-3)

and

n is 140 to 220,

(B) interpolymeric equimolar complexes of a polyamidoimide (PAI-1) of formula I as defined under above A with polyvinylpyrrolidone,

(C) aromatic polyimides consisting of monomer units of the general formula II

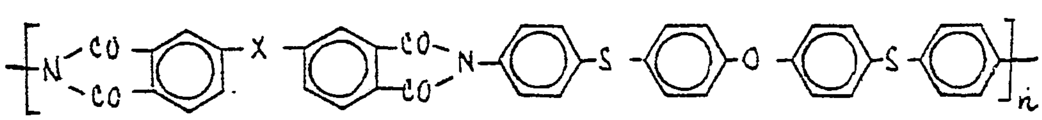 (II)

wherein

X is -O- or 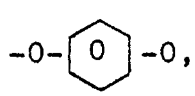,

and

n is 150 to 230,

(D) aromatic polyimides consisting of monomer units of the general formula IIIa and/or IIIb

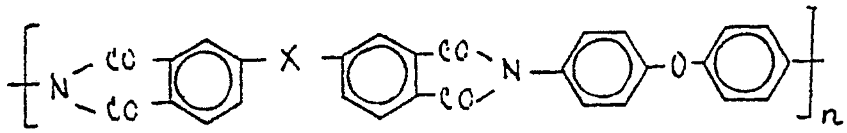

(IIIa)

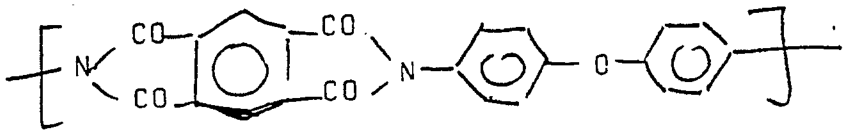

(IIIb)

wherein

X is -O- or 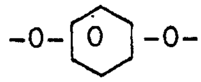

and
n is 150 to 240,

(E) polymeric imides consisting of monomer units of the general formula IV

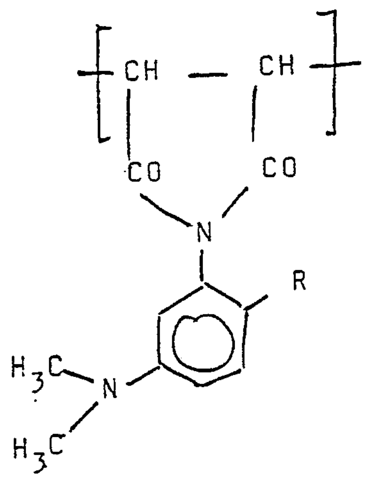

(IV)

wherein R is H or $CH_3$,
and

(F) copolymers comprising monomer units of formula IV as defined under above E, and comonomer units of styrene, methyl methacrylate, methyl acrylate and/or dimethyl aminoethyl methacrylate.

4. A method for preparing the composite polymeric membranes according to claims 1 to 3, characterized by the following steps:

(1) saturating a polymeric porous base of poly(2,6-dimethyl-1,4-phenyleneoxide) with an organic liquid which is inert towards the polymeric base,

(2) drying the polymeric base,

and

(3) applying a solution of a polyamidoimide, an aromatic polyimide and/or a polymeric imide in a solvent which is incompatible with the organic liquid used in step 1 on the surface of the polymeric porous base..

5. The method according to claim 4, characterized in that the polymer used in step 3 is at least one compound selected from

(A) polyamidoimides (PAI) consisting of monomer units of the general formula I

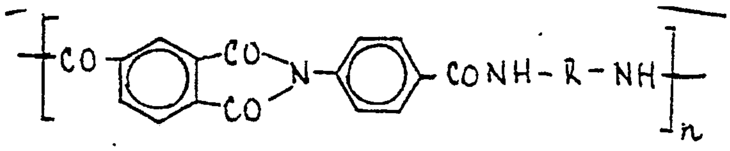 (I)

wherein

R is 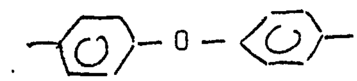 (PAI-1)

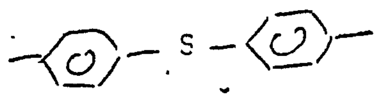 (PAI-2)

or

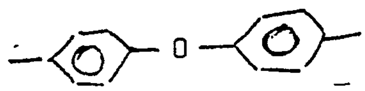 (70 %) and

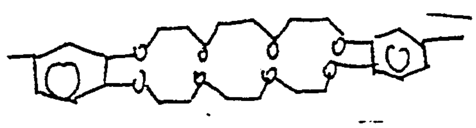 (30 %) (PAI-3)

and

n is 140 to 220,

(B) interpolymeric equimolar complexes of a polyamidoimide (PAI-1) of formula I as defined under above A with polyvinylpyrrolidone,

(C) aromatic polyimides consisting of monomer units of the general formula II

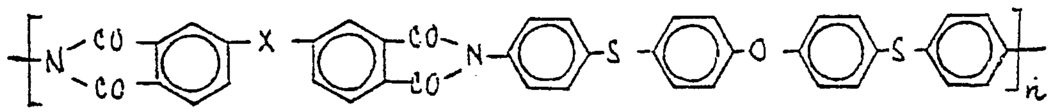 (II)

wherein

X is -O- or 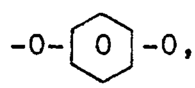

and

n is 150 to 230,

(D) aromatic polyimides consisting of monomer units of the general formula IIIa and/or IIIb

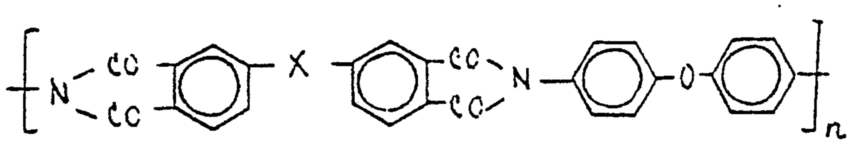 (IIIa)

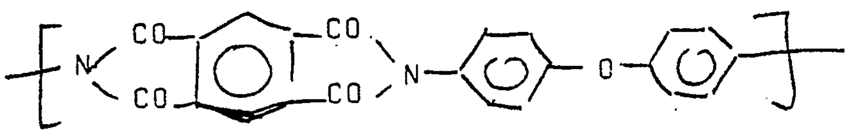

(IIIb)

wherein

X is -O- or -O- 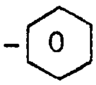 -O-

and

n is 150 to 240,

(E) polymeric imides consisting of monomer units of the general formula IV

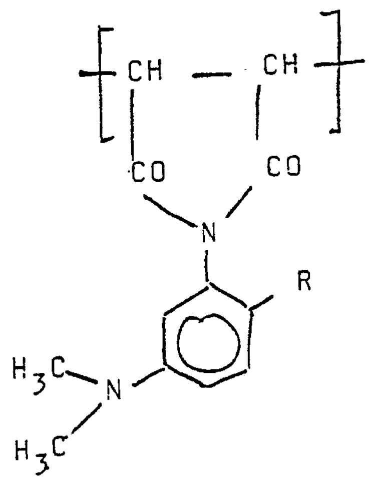

(IV)

wherein R is H or $CH_3$,

and

(F) copolymers comprising monomer units of formula IV as defined under above E, and comonomer units of styrene, methyl methacrylate, methyl acrylate and/or dimethyl aminoethyl methacrylate.

6. The method according to claims 4 and 5, characterized in that in step 1, at least one aliphatic $C_{7-10}$-hydrocarbon is used as inert organic liquid incompatible with the solvent used in step 3.

7. The method according to claims 4 to 6, characterized in that in step 3, N-methylpyrrolidinone, N,N-dimethylformamide and/or N,N-dimethylacetamide are used as solvents for the polymer.

8. The method according to claims 4 to 7, characterized in that in step 3, a 1 to 25 mass-% solution of the polymer is used.

9. The method according to claims 4 to 8, characterized in that in step 3, a solution of a compound of formula V

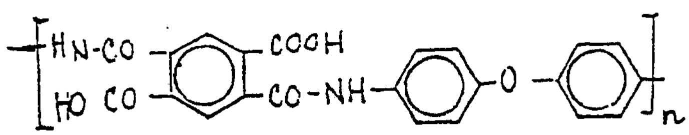

(V)

is coated on the base which is then converted into a compound of formula IIIb by condensation.

10. Use of the composite polymeric membranes according to claims 1 to 3 for the separation of $He/N_2$ and $O_2/N_2$.